# EUROPÄISCHE PATENTANMELDUNG

(11) **EP 1 418 358 A1**
(43) Veröffentlichungstag der Anmeldung: **12.05.2004**
(21) Anmeldenummer: 03104036.3
(22) Anmeldetag: 31.10.2003
(51) Int. Cl.: F16D 13/04

(54) **Selbsttätig schaltende Kupplung**

(30) Priorität: 05.11.2002 DE 10251353
(71) Anmelder: Valeo Sicherheitssysteme GmbH, 85253 Erdweg (DE)
(72) Erfinder: Schwab, Dittmar, 63110, Rodgau (DE); Orth, Dietmar, 85757, Karlsfeld (DE); Humez, Thomas, 85221, Dachau (DE)
(74) Vertreter: Hervouet, Sylvie

(57) **Zusammenfassung**

Die Erfindung betrifft eine selbsttätig schaltende Kupplung, insbesondere zur Anordnung innerhalb eines einen Antriebsmotor umfassenden Antriebsstranges für eine automatisch betätigbare Fahrzeugtür oder eine Fahrzeugklappe.

Um zu erreichen, daß die Kupplung kompakt aufbaubar ist, keine eigene Stromversorgung benötigt und außerdem auch eine manuelle Betätigung der entsprechenden Fahrzeugtür zuläßt, schlägt die Erfindung vor, eine als Antriebsglied der Kupplung (1) dienende Antriebswelle (2) und ein als Abtriebsglied dienendes und auf der Antriebswelle (2) drehbar gelagertes Zahnrad (3) über eine Wandermutter (12) zu verbinden, wobei die Wandermutter (12) in einen Gewindeabschnitt (11) der Antriebswelle (2) formschlüssig eingreift und in bezug auf das Zahnrad (3) drehfest, aber axial verschiebbar angeordnet ist und sich mit ihren beiden axial gegenüberliegenden Stirnflächen (20, 21) über Druckfedern (26-29) an entsprechenden Bereichen (30, 31) eines drehfest mit dem Zahnrad (3) verbundenen Gehäuseteiles (4) abstützt.

## Beschreibung

Die Erfindung betrifft eine selbsttätig schaltende Kupplung, insbesondere zur Anordnung innerhalb eines einen Antriebsmotor umfassenden Antriebsstranges für eine automatisch betätigbare Fahrzeugtür oder eine Fahrzeugklappe (Heckklappe, Motorhaube etc.).

Bei Kraftfahrzeugen mit automatisch betätigbarer Fahrzeugtür oder Fahrzeugklappe (im folgenden auch zusammenfassend nur als Fahrzeugtür bezeichnet) wird beispielsweise vom Fahrer des Fahrzeuges durch eine entsprechende Betätigung eines in der Instrumententafel vorgesehenen Schalters die Fahrzeugtür geschlossen oder geöffnet. Hierzu wirkt das von dem Schalter erzeugte Schaltsignal auf eine elektronische Steuereinrichtung, die ihrerseits elektrische Steuersignale zur Aktivierung eines Elektromotors erzeugt, der dann seinerseits über ein nachgeschaltetes Getriebe und weiteren Übertragungselementen die Fahrzeugtür verschwenkt oder verschiebt.

Um zu vermeiden, daß bei einem manuellen Zudrücken der Fahrzeugtür aufgrund des mit der Fahrzeugtür in Wirkverbindung stehenden Getriebes bzw. Elektromotors ein hoher Widerstand zu überwinden ist, der seinerseits einen erhöhten Verschleiß dieser Bauteile bewirken würde, wird in der nicht vorveröffentlichten deutschen Patentanmeldung 101 52 697.0 eine automatisch betätigbare Fahrzeugtür vorgeschlagen, bei welcher der Motor bzw. das dem Motor nachgeschaltete Getriebe von der die Fahrzeugtür betätigenden Antriebswelle mittels einer elektromagnetischen Schaltkupplung entkuppelbar ist, so daß im ausgeschalteten Zustand der Schaltkupplung eine manuelle Betätigung der Fahrzeugtür möglich ist, ohne daß deren Bewegung durch die an der Antriebswelle der Kupplung angeordneten Baueinheiten (z.B. Elektromotor oder Zwischengetriebe) gehemmt wird.

Derartige elektromagnetische Schaltkupplungen sind in der Regel als reibschlüssige Schaltkupplungen ausgebildet und umfassen daher ein mit einem Reibbelag versehenes und mit einer ersten Welle drehfest verbundenes Rotorteil, an dem auf seiner dem Reibbelag abgewandten Seite eine elektrische Spule angeordnet ist, und eine drehfest, aber axial verschiebbar mit einer zweiten Welle verbundene Ankerscheibe, die im eingeschalteten Zustand der Schaltkupplung gegen den Reibbelag des Rotorteiles der ersten Welle gezogen wird und eine reibschlüssige Verbindung zwischen den beiden Wellen herstellt. Im abgeschalteten Zustand der Schaltkupplung werden die Ankerscheibe und das Rotorteil mittels einer Feder auseinandergedrückt, so daß zwischen Ankerscheibe und Reibbelag ein genau vorgegebener spaltförmiger Abstand besteht.

Die vorstehend erwähnten Fahrzeugtüren weisen allerdings den Nachteil auf, daß sie relativ aufwendig aufgebaut sind und eine elektrische Stromversorgung benötigen.

Der Erfindung liegt die Aufgabe zugrunde, eine selbsttätig schaltende Kupplung anzugeben, die kompakt aufbaubar ist, keine eigene Stromversorgung benötigt und außerdem auch eine manuelle Betätigung der entsprechenden Fahrzeugtür zuläßt.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, eine als Antriebsglied der Kupplung dienende Antriebswelle und ein als Abtriebsglied dienendes und auf der Antriebswelle drehbar gelagertes Zahnrad über eine Wandermutter zu verbinden, wobei die Wandermutter in einen Gewindeabschnitt der Antriebswelle formschlüssig eingreift und in bezug auf das Zahnrad drehfest, aber axial verschiebbar angeordnet ist und sich mit ihren beiden axial gegenüberliegenden Stirnflächen über Druckfedern an entsprechenden Bereichen eines drehfest mit dem Zahnrad verbundenen Gehäuseteiles abstützt.

Dreht sich daher, ausgehend von einer ersten Endlage der Wandermutter, aufgrund der Aktivierung eines Antriebsmotors die Antriebswelle, so verschiebt sich die Wandermutter axial entlang des Gewindeabschnittes der Antriebswelle so lange, bis durch das Zusammendrücken der in Bewegungsrichtung der Wandermutter angeordneten Druckfedem die Reibungskräfte größer sind als die Haltekraft des Zahnrades. Die Kupplung ist jetzt eingekuppelt und das Zahnrad beginnt sich gemeinsam mit der Antriebswelle zu drehen und die entsprechende Fahrzeugtür wird geöffnet oder geschlossen.

Soll z.B. bei Ausfall der Stromversorgung des Antriebsmotors die Fahrzeugtür geöffnet oder geschlossen werden, so kann diese manuell verschwenkt werden, ohne daß eine besondere Belastung auf die Antriebswelle und damit auf das vorgeschaltete Getriebe und den Antriebsmotor ausgeübt wird. Denn mit dem Verschwenken der Fahrzeugtür wird das Zahnrad und über das Gehäuseteil auch die Wandermutter gedreht, und zwar derart, daß ein Auskuppeln der Kupplung erfolgt.

Um zu erreichen, daß die Wandermutter in bezug auf das Gehäuseteil zwar axial verschiebbar, aber drehfest mit diesem verbunden bleibt, kann an der Wandermutter mindestens ein sich in radialer Richtung erstreckender Führungsnocken angeordnet sein, der in eine sich in axialer Richtung erstreckende nutenförmige Ausnehmung des Gehäuseteiles eingreift.

Dabei hat es sich als besonders vorteilhaft erwiesen, wenn sich der jeweilige Führungsnocken in radialer Richtung über elastische Elemente an der Wandermutter abstützt, wobei die elastischen Elemente und die Kontur der Seitenwände der nutenförmigen Seitenwände derart gewählt sind, daß im Überlastfall, d.h. kurz vor Erreichen der maximalen Haltekräfte des Motorgetriebes, die Führungsnocken zur Antriebswelle hin verschoben werden und sich auf der außerhalb der nutenförmigen Ausnehmungen befindlichen inneren Seitenwand des Gehäuseteiles abstützen, so daß die Antriebswelle gegenüber dem Zahnrad drehbar ist.

Bei einer Ausführungsform der Erfindung ist mindestens eine der beiden stirnseitigen Wände des Gehäuseteiles in dem Bereich, in dem sie von den Druckfedern beaufschlagt werden, als Gewindering ausgebildet, so daß durch Einschrauben des Gewinderinges in das Gehäuseteil die Druckfedern vorspannbar sind.

Weitere Einzelheiten und Vorteile der Erfindung ergeben sich aus dem folgenden anhand von Figuren erläuterten Ausführungsbeispiel. Es zeigen:
Fig. 1 den Längsschnitt einer erfindungsgemäßen Kupplung und
Fig.2 einen Querschnitt durch die in Fig. 1 dargestellte Kupplung entlang der dort mit II-II bezeichneten Schnittlinie.

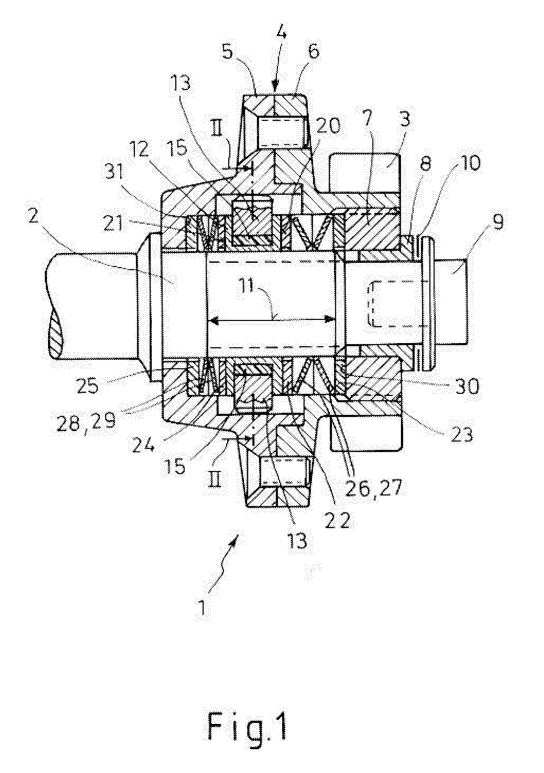

In Fig. 1 ist mit 1 eine erfindungsgemäße Kupplung zum automatischen Betätigen einer nicht dargestellten Heckklappe eines Kraftfahrzeuges bezeichnet. Die Kupplung 1 umfaßt als Antriebsglied eine mit einem Antriebsmotor (nicht dargestellt) oder einem Zwischengetriebe verbundene Antriebswelle 2 und als Abtriebsglied ein um die Antriebswelle 2 drehbares Zahnrad 3, welches beispielsweise mit einem auf der Scharnierachse der Heckklappe angeordneten Zahnrad (nicht dargestellt) in Eingriff steht.

Mit dem Zahnrad 3 ist ein Gehäuseteil 4 drehfest verbunden, welches die Antriebswelle 2 seitlich umschließt und sich zwecks einfacher Montage der einzelnen Komponenten der Kupplung 1 aus zwei axial hintereinander angeordneten Gehäuseabschnitten 5, 6 zusammensetzt, die miteinander verschraubt sind. Dabei wird der Gehäuseabschnitt 6 durch das Zahnrad 3 selbst gebildet und stützt sich radial über einen Gewindering 7 und eine Gleitbuchse 8 an der Antriebswelle 2 ab. Das Gehäuseteil 4 wird auf der Antriebswelle 2 über eine Sechskantschraube 9 gesichert. Dabei dient eine Wellscheibe 10 als Toleranzausgleich und verhindert Klappergeräusche beim Fahren des Fahrzeuges.

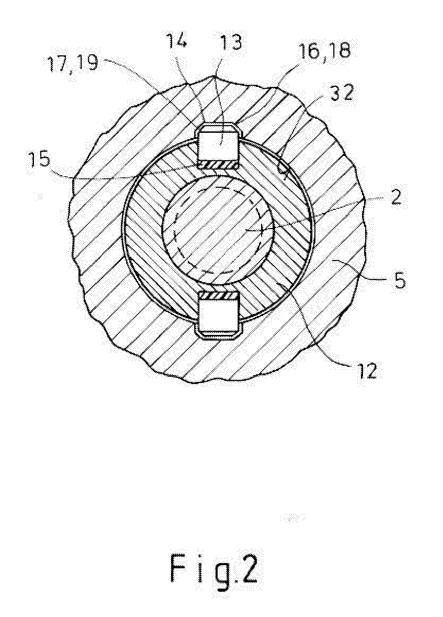

Die Antriebswelle 2 weist einen Gewindeabschnitt 11 auf, in den eine Wandermutter 12 formschlüssig eingreift. Damit die Wandermutter 12 -abgesehen von dem weiter unten noch zu beschreibenden Überlastfall- bei Drehung der Antriebswelle 2 in axialer Richtung eine lineare Bewegung ausführt, ist sie mit zwei gegenüberliegenden, sich in radialer Richtung erstreckenden Führungsnocken 13 verbunden, welche in axiale nutenförmige Ausnehmungen 14 des Gehäuseteiles 4 eingreifen. Die Führungsnocken 13 stützen sich über elastische Elemente 15 (z.B. Druckfedern) an der Wandermutter 12 ab. Außerdem weisen die Führungsnocken 13 auf ihren den Seitenwänden 16, 17 der nutenförmigen Ausnehmungen 14 zugewandten Seitenwände 18, 19 eine schräge an die Seitenwände 16, 17 angepaßte Kontur auf (Fig.2).

Die Wandermutter 12 stützt sich außerdem mit ihren beiden axial gegenüberliegenden Stirnflächen 20, 21 über Gleitscheiben 22, 23 und 24, 25 und Tellerfedern 26, 27 und 28, 29 an entsprechenden axial gegenüberliegenden Bereichen 30, 31 des Gehäuseteiles 4 ab. Dabei stützt sich die Gleitscheibe 23 an dem Gewindering 7 ab, so daß durch Herein- oder Herausschrauben des Gewinderinges 7 in oder aus dem Gehäuseteil 4 die Tellerfedern 26-29 auf einen vorgegebenen Wert vorspannbar sind.

Nachfolgend wird auf die Wirkungsweise der erfindungsgemäßen Kupplung 1 eingegangen. Dabei möge sich die nicht dargestellte Heckklappe in ihrer geschlossenen Stellung und die Kupplung 1 in ihrer in Fig. 1 dargestellten Ausgangsstellung befinden (gespannte Tellerfedern 28, 29).

Wird nun der Antriebsmotor zum Verschwenken der Heckklappe aktiviert, so dreht sich die Antriebswelle 2 mit dem Gewindeabschnitt 11. Dadurch wird die Wandermutter 12 axial in Richtung auf den Gewindering 7 verschoben.

Zunächst werden die Tellerfedern 28, 29 entspannt und damit die Antriebswelle 2 und das Zahnrad 3 entkuppelt (ausgekuppelter Zustand der Kupplung 1). Mit zunehmender Verschiebung der Wandermutter 12 werden dann die Gleitscheiben 22, 23 gegen den Druck der Tellerfedern 26, 27 zusammengedrückt, bis die Reibungskraft, welche die Gleitscheiben 22, 23 auf die Wandermutter und den Gewindering ausüben, höher ist als die Haltekraft des mit der Heckklappe in Wirkverbindung stehenden Zahnrades 3. Die Kupplung 1 ist nun wiederum eingekuppelt, und das Zahnrad 3 dreht sich gemeinsam mit der Antriebswelle 2, so daß die Heckklappe sich zu öffnen beginnt. Dieser Vorgang wird so lange fortgesetzt, bis der Antriebsmotor z.B. über einen entsprechenden, die Heckklappenstellung überwachenden Sensor (nicht dargestellt) abgeschaltet wird.

Das Schließen der Fahrzeugtür erfolgt in entsprechender Weise, wobei sich die Antriebswelle in entgegengesetzter Richtung dreht. Dabei wird wiederum zunächst die Kupplung 1 ausgekuppelt und dann nach entsprechendem Zusammendrücken der Gleitscheiben 24, 25 wieder eingekuppelt, so daß sich das Zahnrad 3 mit der Antriebswelle 2 so lange in entgegengesetzter Richtung drehen bis die Heckklappe geschlossen ist.

Bei einem Ausfall der Stromversorgung für den Antriebsmotor kann die Fahrzeugtür problemlos manuell geöffnet oder geschlossen werden, ohne daß die Antriebswelle 2, das Zwischengetriebe und/oder der Antriebsmotor besonderen Belastungen ausgesetzt sind. Denn mit dem Verschwenken der Fahrzeugtür wird das Zahnrad 3 und über das Gehäuseteil 4 auch die Wandermutter 12 gedreht. Dadurch wird die Kupplung ausgekuppelt und die Heckklappe im ausgekuppelten Zustand der Kupplung 1 geschlossen oder geöffnet.

Sollte aus irgendwelchen Gründen der Antriebsmotor nicht bei Erreichen der geöffneten oder geschlossenen Stellung der Heckklappe abschalten, so werden beim Überschreiten einer vorgegebenen Kraft, die unterhalb der maximalen Haltekraft des Motorgetriebes liegt (Überlastfall), die Führungsnocken 13 zur Antriebswelle 2 hin aus den nutenförmigen Ausnehmungen 14 herausgeschoben und stützen sich auf der Innenwand 32 des Gehäuseteiles 4 ab. Damit kann sich die Antriebswelle 2 gegenüber dem Gehäuseteil 4 und damit auch gegenüber dem Zahnrad 3 frei drehen und eine Beschädigung des der Antriebswelle 2 vorgeschalteten Zwischengetriebes bzw. des Antriebsmotors vermieden wird.

Die Erfindung ist selbstverständlich nicht auf das vorstehend beschriebene Ausführungsbeispiel beschränkt. So braucht das Zahnrad 3 der Kupplung 1 nicht zwingend mit einem auf der Scharnierachse einer Fahrzeugtür befindlichen Zahnrad in Eingriff zu stehen, sondern kann beispielsweise auch über ein nachgeschaltetes Getriebe auf eine Hebelanordnung wirken, welche die Fahrzeugtür betätigt.

Außerdem braucht es sich bei den die Wandermutter 12 axial beaufschlagenden Federn nicht unbedingt um Tellerfedern zu handeln, sondern es können beispielsweise auch Blatt- oder Zylinderfedern verwendet werden.

### Bezugszeichenliste

- 1: Kupplung
- 2: Antriebswelle
- 3: Zahnrad
- 4: Gehäuseteil
- 5: Gehäuseabschnitt
- 6: Gehäuseabschnitt
- 7: Gewindering
- 8: Gleitbuchse
- 9: Sechskantschraube
- 10: Wellscheibe
- 11: Gewindeabschnitt
- 12: Wandermutter
- 13: Führungsnocken
- 14: Nutenförmige Ausnehmung
- 15: Elastisches Element
- 16,17: Seitenwände (nutenförmige Ausnehmung)
- 18,19: Seitenwände (Führungsnocken)
- 20,21: Stirnflächen
- 22-25: Gleitscheiben
- 26-29: Tellerfedern, Druckfedern
- 30,31: Bereiche (Gehäuseteil)
- 32: Innenwand

## Patentansprüche

1. Selbsttätig schaltende Kupplung, insbesondere zur Anordnung innerhalb eines einen Antriebsmotor umfassenden Antriebsstranges für eine automatisch betätigbare Fahrzeugtür oder eine Fahrzeugklappe, mit den Merkmalen:
a) die Kupplung (1) umfaßt als Antriebsglied eine mit dem Antriebsmotor oder einem Zwischengetriebe verbundene Antriebswelle (2) und als Abtriebsglied ein um die Antriebswelle (2) drehbar angeordnetes Zahnrad (3), welches drehfest mit einem die Antriebswelle (2) seitlich umschließenden Gehäuseteil (4) verbunden ist;
b) die Antriebswelle (2) weist einen Gewindeabschnitt (11) auf, in den eine Wandermutter (12) formschlüssig eingreift;
c) die Wandermutter (12) ist mit mindestens einem sich in radialer Richtung erstreckenden Führungsnocken (13) verbunden, welcher in eine axiale nutenförmige Ausnehmung (14) des Gehäuseteiles (4) eingreift;
d) die Wandermutter (12) stützt sich mit ihren beiden axial gegenüberliegenden Stirnflächen (20, 21) über Druckfedern (26-29) an entsprechenden Bereichen (30, 31) des Gehäuseteiles (4) ab, derart, daß, ausgehend von einer ersten Endlage der Wandermutter (12), bei Drehung der Antriebswelle (2) die Wandermutter (12) sich axial so lange verschiebt, bis durch das Zusammendrücken der in Bewegungsrichtung der Wandermutter (12) angeordneten Druckfedern (26-29) die Reibungskräfte zwischen der Wandermutter (12) und den Druckfedern (26-29) sowie zwischen den durch die Druckfedern beaufschlagten Bereichen (30, 31) des Gehäuseteiles (4) und den Druckfedern (26-29) größer sind als die Haltekraft des Zahnrades (3), so daß sich dann das Zahnrad (3) gemeinsam mit der Antriebswelle (2) dreht.

2. Kupplung nach Anspruch 1, **dadurch gekennzeichnet, daß** die Druckfedern (26-29) sich über Gleitscheiben (22-25) an den Stirnflächen (20,21) der Wandermutter (12) und den entsprechenden Bereichen (30, 31) des Gehäuseteiles (4) abstützen.

3. Kupplung nach Anspruch 1 oder 2, **dadurch gekennzeichnet, daß** die Führungsnocken (13) sich in radialer Richtung über elastische Elemente (15) an der Wandermutter (12) abstützen, wobei die elastischen Elemente (15) und die Kontur der Seitenwände (16, 17, 18, 19) der nutenförmigen Ausnehmungen (14) und der Führungsnocken (13) derart gewählt sind, daß vor dem Auftreten maximaler Haltekräfte des Antriebsmotors und/oder des Zwischengetriebes die Führungsnocken (13) zur Antriebswelle (2) hin verschoben werden und sich auf der außerhalb der nutenförmigen Ausnehmungen (14) befindlichen Innenwand (32) des Gehäuseteiles (4) abstützen, so daß die Antriebswelle (2) sich gegenüber dem Zahnrad (3) dreht.

4. Kupplung nach einem der Ansprüche 1 bis 3, **dadurch gekennzeichnet, daß** es sich bei den Druckfedern (26-29) um Tellerfedern handelt.

5. Kupplung nach einem der Ansprüche 1 bis 4, **dadurch gekennzeichnet, daß** mindestens eine der beiden Stirnflächen (20) des Gehäuseteiles (4) als Gewindering (7) ausgebildet ist, mittels welchem die Druckfedern (26-29) vorspannbar sind.
